# EUROPEAN PATENT APPLICATION

(11) **EP 2 503 500 A1**
(43) Date of publication of application: **26.09.2012**
(21) Application number: 12160568.7
(22) Date of filing: 21.03.2012
(51) Int. Cl.: G06Q 30/02

(54) **Method and system for creating targeted advertising utilizing behavioral economics marketing experts**

(30) Priority: 23.03.2011 US 201161466585 P; 19.01.2012 US 201213353529
(71) Applicant: Pitney Bowes Inc., Stamford, CT 06926-0700 (US)
(72) Inventor: Foth, Thomas J., Trumbull, CT 06611 (US); Gold, Andrew, Armonk, NY 10504 (US); Gravenstreter, Neil, New Boston, MA 48164 (US); Xi, Yue, Middle Island, NY 11953 (US)
(74) Representative: HOFFMANN EITLE

(57) **Abstract**

A system and method for generating targeted advertising that utilizes behavioral economics marketing experts to generate advertising. The system prompts the user for the nature of their business (business vertical), the product they wish to promote, and a target audience for the advertising. Using the business vertical, the product selected, and the personas selected, the system (10, 15, 20) scans a list of pre-defined advertising templates, prepared by experts in behavioral economics marketing, for matches based on the business vertical, product selected, and personas. The list of matching advertising templates is presented to the user (25) for modification, if desired. The user, after selecting and modifying a template, if necessary, can then select that finished advertisement to be produced and sent to the target audience.

## Description

This application claims the benefit of U.S. Provisional Application Serial No. 61/466,585, filed March 23, 2011, the specification of which is hereby incorporated by reference.

The invention disclosed herein relates generally to targeted advertising systems, and more particularly to a method and system that utilizes behavioral economics marketing experts to generate targeted advertising.

In today's highly competitive business world, advertising to customers, both potential and previous, is a necessity. Businesses are always looking for ways to increase revenue, and increasing its customer base through advertising plays a large part in many business's plans for growth. Advertising has shown to be an effective method to inform, persuade or remind target buyers of the business' goods, services or goodwill, with the ultimate goal being that an advertisement will result in the sale of the goods or services. There are several forms of advertising available for businesses to use, including, for example, TV or radio, newspapers, magazines, and direct mail, each having a corresponding cost associated therewith. Unfortunately, the business bears the expenses of generating and disseminating such advertising, regardless of the media. Large businesses are able to absorb the cost of such advertising, and typically can utilize any of the media types, and employ teams of marketing personnel or hire outside marketing firms to generate advertising collateral to send to potential customers. Small or medium businesses, however, may not be able to afford the more expensive types of media, e.g., TV, radio, newspaper, etc, and typically do not have the resources to hire marketing personnel or outside consultants to generate such advertising collateral. Accordingly, many small to medium businesses utilize direct mail for the majority of their advertising.

Unfortunately, even direct mail advertising has associated costs to produce the mail pieces and deliver them. One factor that is considered when a business makes a decision on advertising is the return on their investment. If an advertising campaign is successful, the return in the form of increased sales/revenue outweighs the cost of the advertising campaign, thus making the advertising campaign a smart investment in helping the business grow. One way to increase the return on the investment in an advertising campaign is to ensure that the message is reaching the right audience. Any advertising campaign is doomed to fail if a majority of the recipients have no interest in purchasing the product being advertised. It is therefore preferable to target the advertising to only potential customers that are likely to be interested in the product being advertised. Another way to increase the response rate is to make sure that the advertising language will have the desired impact on the potential customers to prompt the desired response. However, identifying such potential customers and generating suitable language typically requires sophisticated marketing analysis performed by marketing personnel or outside consultants. For companies without large advertising budgets, these services are typically unavailable. This leads many businesses to either advertise erratically, or never advertise.

The present invention alleviates the problems described above and provides a system and method for generating targeted advertising that utilizes behavioral economics marketing experts to generate advertising. In a preferred embodiment, the system is operated on a web server which is accessed using a remote terminal, such as a personal computer or the like, connected to a network. The system prompts the user for the nature of their business (business vertical), or may identify this for them based on the address they provide or a previous session. The system next asks about the product they wish to promote based on list of products provided to the user that is based on an expert analysis of products that businesses in this vertical are likely to wish to market. After this, the system asks the user to identify a target audience for the advertising. This is done by first providing a geographic location where the advertising is to take place and then by selecting from a list of personas of people living in that geographic area. Using the business vertical, the product selected, and the personas selected, the system scans a list of pre-defined advertising templates, prepared by experts in behavioral economics marketing, for matches based on the business vertical, product selected, and personas. The list of matching advertising templates is presented to the user for modification, if desired. The user, after selecting and modifying a template, if necessary, can then select that finished advertisement to be produced and sent to the target audience. In one embodiment, production is specifically printed and mailed to the target audience. In other embodiments, production may include causing a TV or radio ad to be custom produced and time purchased on media outlets, causing an ad to be produced and space bought in magazine and newspapers, causing an email to be sent to target customers, or causing banner ads to be purchased on the internet or cell phones.

Therefore, it should now be apparent that the invention substantially achieves all the above aspects and advantages. Additional aspects and advantages of the invention will be set forth in the description that follows, and in part will be obvious from the description, or may be learned by practice of the invention. Moreover, the aspects and advantages of the invention may be realized and obtained by means of the instrumentalities and combinations particularly pointed out in the appended claims.

The accompanying drawings illustrate presently preferred embodiments of the invention, and together with the general description given above and the detailed description given below, serve to explain the principles of the invention. As shown throughout the drawings, like reference numerals designate like or corresponding parts.
FIG. 1 illustrates in block diagram form a system for creating targeting advertising utilizing behavioral economics marketing experts according to an embodiment of the invention;
FIG. 2 illustrates in flow diagram form operation of the system of Fig. 1 according to an embodiment of the invention;
FIG. 3 is an exemplary website screen to provide access for creating targeted advertising;
FIG. 4 is an exemplary website screen illustrating an exemplary list of potential products for marketing;
FIG. 5 is an exemplary website screen illustrating an exemplary list of categories of people living in a geographic area;
FIG. 6 is an exemplary website screen illustrating an exemplary list of target profiles within a category of people;
FIG. 7 is an exemplary website screen illustrating exemplary media types for use in creating targeted advertising;
FIG. 8 is an exemplary website screen illustrating exemplary templates for use in creating targeted advertising;
FIG. 9 is an exemplary website screen illustrating how a template can be customized; and
FIG. 10 is an exemplary website screen illustrating an exemplary summary page for creating targeted advertising.

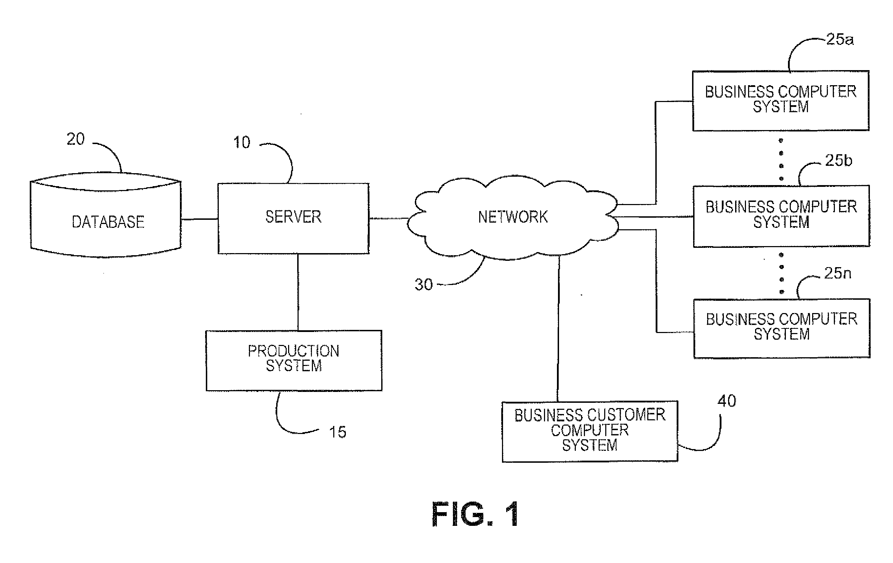

Figure 1 is a block diagram of a system for creating targeted advertising utilizing behavioral economics marketing experts according to an embodiment of the present invention. Behavioral economics, and its related area of study, behavioral finance, use social, cognitive and emotional factors in understanding the economic decisions of individuals and institutions performing economic functions, including consumers, borrowers and investors, and their effects on market prices, returns and resource allocation. Use of the present invention enables a business to focus on a specific customer behavior, select an appropriate behavioral economic message template, designed by a behavioral economic marketing expert, supplement or provide a mailing list, provide an anticipated response rate and projected return on investment, select elements for each mail piece based on demographics and psychographics, and track responses to the mail pieces. The present invention also allows a business to produce and deliver the generated messages using one or more different forms of media, including the printing and mailing of a physical mail piece to the target audience, causing a TV or radio ad to be custom produced and time purchased on media outlets, causing an ad to be produced and space bought in magazine and newspapers, causing an email to be sent to target customers, or causing banner ads to be purchased on the internet or cell phones.

As illustrated in Fig. 1, a server computer system 10 is in electronic communication with a network 30, which may be, for example, the Internet, one or more private computer networks, or any combination thereof. The server computer system 10 is operated by and under the control of a trusted third party that enables businesses, of any size, to create targeted advertising using behavioral economics marketing experts without the costs associated with maintaining a marketing department or having to hire expensive outside marketing consultant firms. The server computer system 10 is also in electronic communication with a database 20. Database 20 stores information including, for example and without limitation, templates for use in advertising that have been created by behavioral economics marketing experts. These templates, created by such experts, are based on an understanding of the product value propositions, demographic groupings, and demographic drivers that elicit the desired response from the target recipients, thereby increasing response rates to such advertising. Database 20 also stores certain demographic information relating to recipients that may be potential customers for a business, such as, without limitation, recipient's name and address (residence address and/or email address), census data (number of people in household, ages, etc.), income levels, credit history, interests (e.g., sports, hobbies, etc.), purchasing history (e.g., particular products purchased from particular sources) of each potential customer, and/or marketing information obtained from other sources. The information stored in the database 20 may be obtained from various sources. A production system 15 is coupled to the server computer system 10 and can include, for example, a printing device, a folding/inserting device, postage printing device, etc. that can be used to generate a physical mail piece for delivery as described below.

One or more business computer systems (25a, 25b ... 25n), such as, for example, personal computers or the like, can access the server computer system 10 via the network 30. Additionally, a business customer computer system 40, which may also be a personal computer or the like, is coupled to the network 30. It should be understood that the number of business computer system 25 and business customer computer systems 40 are not limited in number, and any number can be connected to the network 30.

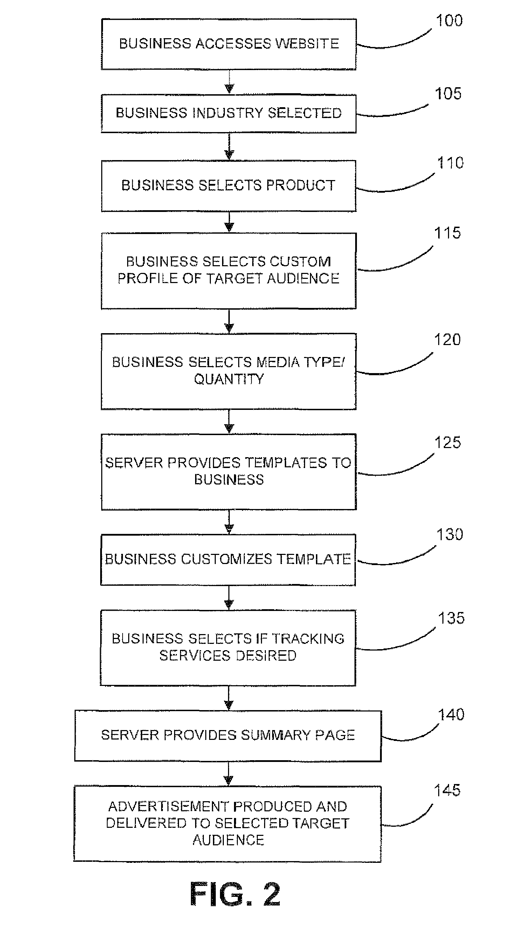

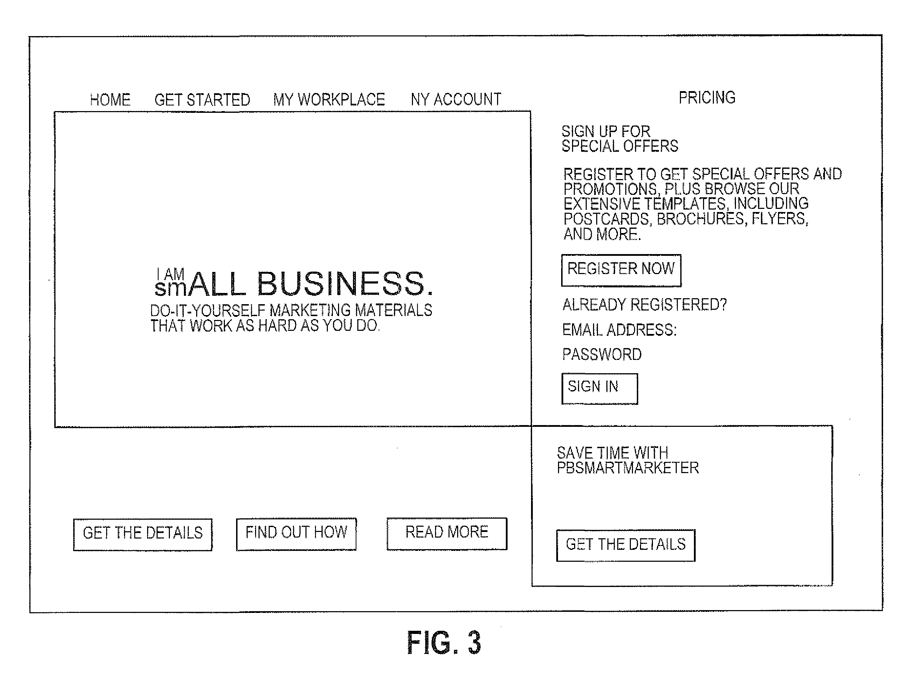

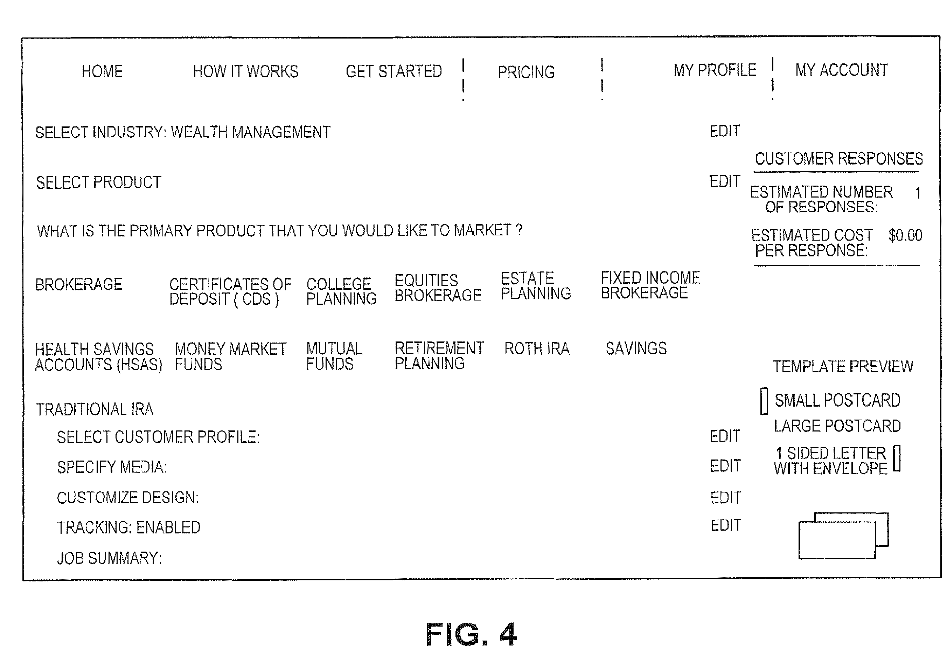

Fig. 2 illustrates in flow diagram form how a business can generate targeted advertising that utilizes behavioral economics marketing experts utilizing the present invention. Server 10 hosts a website which a business, using a business computer system 25, accesses in step 100 via the network 30. As illustrated in Fig. 3, such access can utilize security protocols, such as, for example, e-mail address/password, to ensure only those businesses that have already registered can access all of the features of the website. For those businesses not registered, a registration page can be provided for a business to register and provide information about the business. In step 105, the business selects the nature of the industry in which they operate, also referred to as the business vertical, and, optionally, a sub-industry. Alternatively, server 10 can provide this information to the business for confirmation based on the log-in information provided by the business. Such verticals could include, for example, and without limitation, financial services, insurance, and wealth management. Once the business has selected the business vertical, then server 10 provides a list of potential products, that the business may wish to advertise. A exemplary list is illustrated in Fig. 4. This list of potential products is based on an expert analysis of products that businesses in this vertical are likely to wish to market to potential or existing customers. For example, if the business selects a vertical of wealth management, the product list could include brokerage products, certificates of deposit, college planning, retirement planning, IRA planning, etc. In step 110, the business selects a product.

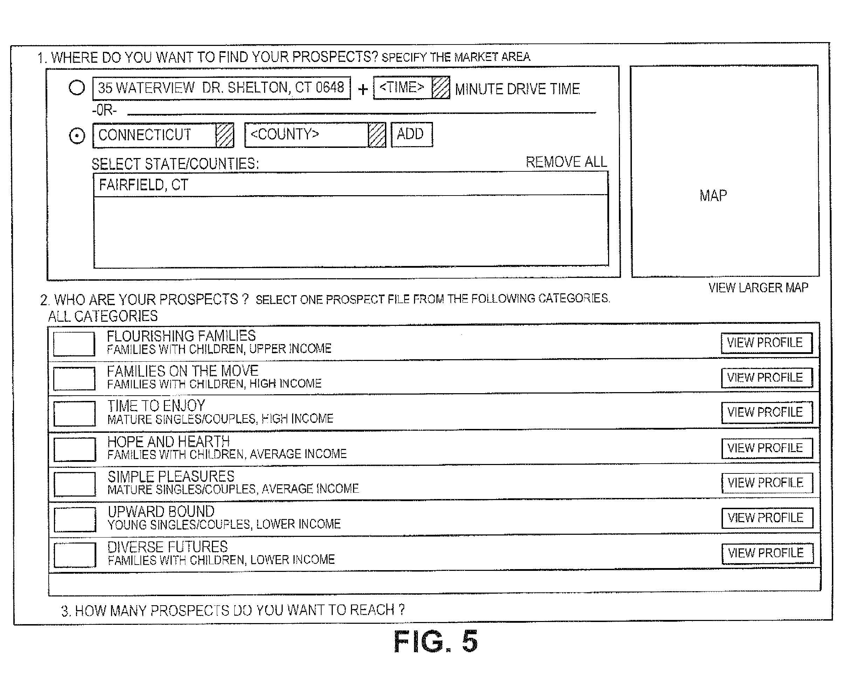

Once the business has identified a product, then in step 115 the business selects a custom profile that identifies a target audience for the advertising. Preferably, this includes first providing one or more geographic areas where the advertising is to take place. The geographic areas can be limited, for example, by a state or states, or one or more counties located within a state or states. Once a geographic area has been selected by the business, then the server 10 provides a list of general categories of people living in that geography, based on the information stored in database 20, for selection by the business. Such general categories could be based on age, income level, children, etc. For example, an exemplary list of categories is illustrated in Fig. 5 for Fairfield County, CT, that includes the following: Flourishing Families - families with children, upper income; Young City-dwellers - young singles/couples, high income; Families on the Move - families with children, high income; Time to Enjoy - mature singles/couples, high income; Worlds of Youth - young singles/couples, average income; Hope and Hearth - families with children, average income; Simple Pleasures - mature singles/couples, average income; Upward Bound - young singles/couples, lower income; Diverse Futures - families with children, lower income; and Mature Settings - mature singles/couples, lower income.

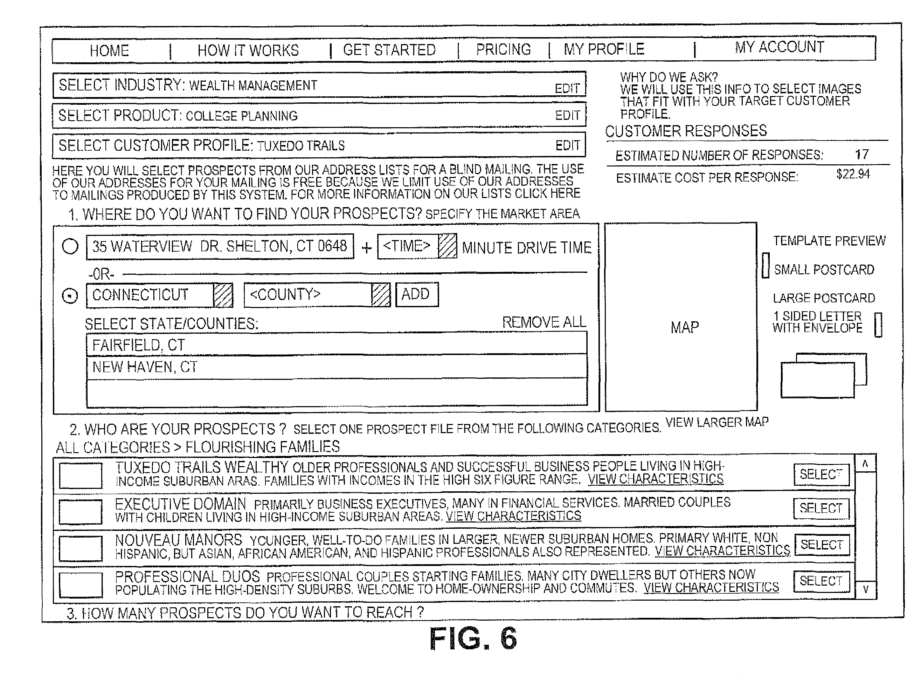

Once the business has selected a category, the server 10 provides the business with a list of more specific profiles of people within each category, again based on the information stored within the database 20. The business can then select a specific profile of a target audience. For example, as illustrated in Fig. 6, specific profiles includes in the category of Flourishing Families can include the following: Tuxedo Trails - wealthy, older professionals and successful business people living in high-income suburban areas, families with incomes in the high six figure range; Executive Domain - primarily business executives, many in financial services. Married couples with children living in high-income suburban areas. Nouveau Manors- younger, well-to-do families in larger, newer, suburban homes. Primarily white, non-Hispanic but Asian, African-American, and Hispanic professional also represented. Professional Duos - professional couples starting families. Many city dwellers but others now populating the high-density suburbs. Welcome to home-ownership and longer commutes. Balancing Acts - professional families with children; soccer mom country. Relatively high-income couples with owner-occupied, suburban homes. Equestrian Heights - married couples with teenaged children. High-income, low-density suburbanites. Extra cars in the driveway and a horse down the road. Suburban Establishment - middle-aged couples, many with empty nests, living in older suburban areas. Established careers in medicine, law, and business. Each specific profile can also include a link to more specific characteristics of the profile. For example, the characteristics of the Tuxedo Trails profile could include the following key characteristics and description:
"Key Differentiators : Highest income and highest wealth
Household: Couples and families with children
Income: Very high income, average $215,877
Householder Age: Age 35 to 54
The rich follow different trails. They occasionally wear tuxedos, and in the case of westerners, ride horses, go boating, and dine at exclusive country club restaurants, dressing casual not in tuxes. This highest income cluster - 25 percent are householders with incomes above $200,000 - epitomizes the wealthy set. Average household income is $175,000. Wealth with a Western flair; families with kids; householders aged 35 to 54; graduate and professional education; business, professional, and entrepreneurial employment; predominantly white, non-Hispanic but be assured, this cluster also captures the highest income African American, Asian American, and Hispanic families."

The characteristics of the Nouveau Manors profile could include the following key characteristics and description:
"Key Differentiators : Busy, suburban high income families
Household: Families with children
Income: High income, average $117,592
Householder Age: Age 35 to 54
Rush home from work, improvise dinner, pick up the kid(s), greet the spouse in the fog of go, go, go. These dual-earning couples in the suburbs are not necessarily two professionals trying to combine career and family but they manage. This is "soccer mom" country, and a "balancing act" because of the high proportion of school-aged kids and working parents. They have relatively new homes, 90 percent owner occupied, and are college educated scientists, information industry, and health care workers sharing high-speed internet connections. Fully 90 percent are white, non-Hispanic with an average family income of $97,000. Go figure...and work out tomorrow's family schedule.

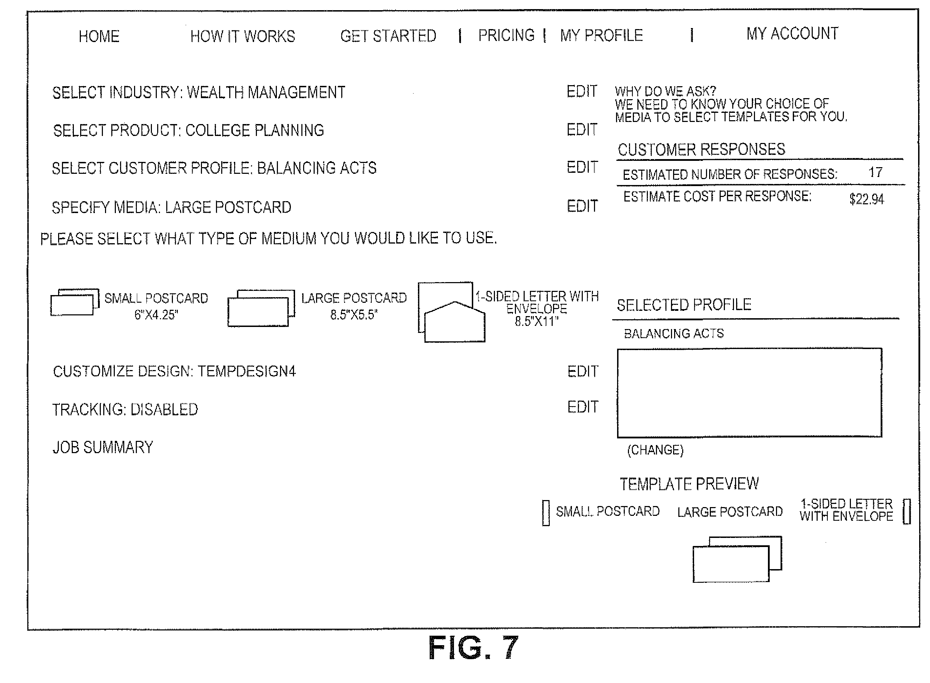

Thus, a business is able to basically shop for target audience based on one or more geographic locations and specific demographics of people living in that geographic area. In step 115, based on the information provided by the server 10, the business can select one or more specific custom profiles of their intended target audience. In should be noted that the selection of a geographic area and target audience can be performed in either order. At this point, the business now has selected the product they wish to advertise, and a target audience(s)/area(s) for such advertising. The server 10 then provides the business with a list of different media types for the business to select for the advertising. Fig. 7 illustrates some exemplary types of media, which can include, for example, holiday cards, jumbo postcards, thank you cards with envelopes, small postcards, letters with envelopes, etc. It should be noted that while Fig. 7 illustrates different types of physical mail pieces, the invention is not so limited and can also include TV or radio ads, magazine and newspaper ads, email advertising, or banner ads for use on the internet or cell phones. In step 120, the business selects the desired media type and, if applicable, the quantity of advertisements to be sent. If the number of potential targets in the selected profile/area exceeds the quantity chosen by the business, system 10 will automatically randomly select a subset of the potential targets based on the quantity selected by the business.

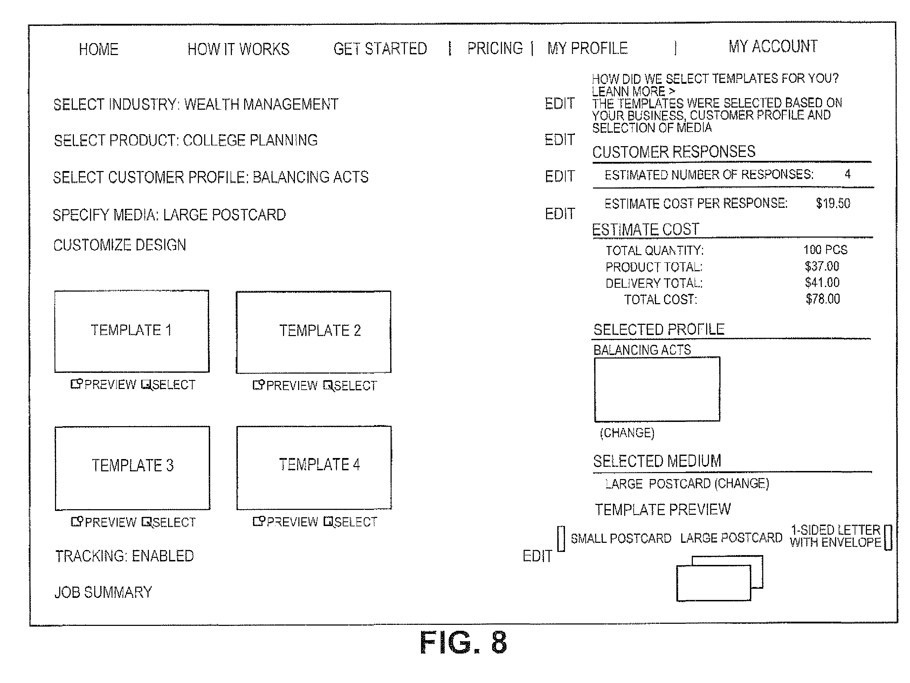

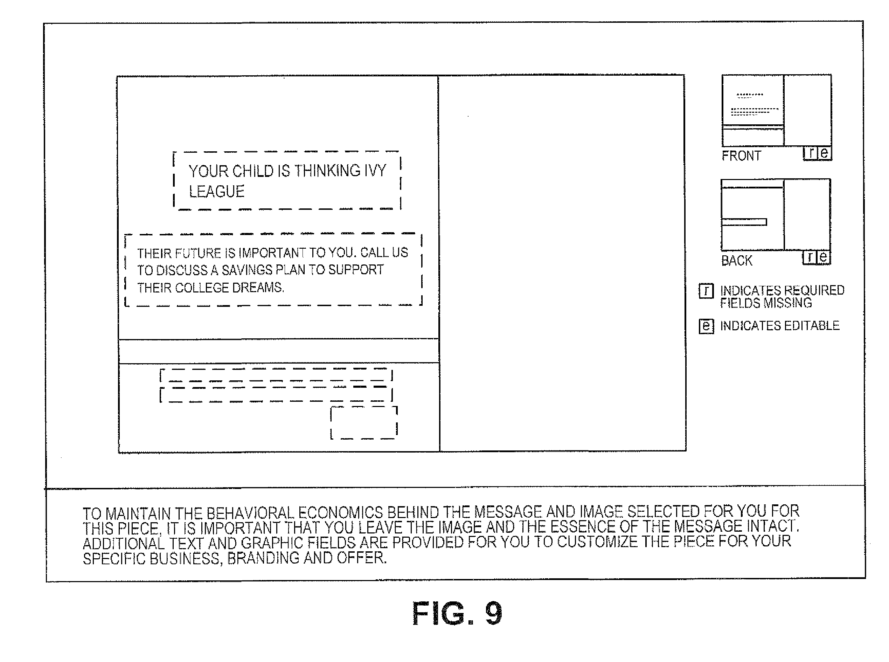

In step 125, the server 10 provides the business with one or more templates for use in their advertising campaign, based on the product, profiles, and media type selected by the business, and the business selects a template. The templates, preferably stored in database 20, are prepared by experts in behavioral economics marketing, to utilize specific images, colors and language that has proven to be successful in soliciting the response desired - a response to the advertisement from the target. Each template is designed by the experts based on the industry, product, and custom profile to maximize the response rate for those attributes. Thus, even if the industry and product are the same, the templates might be very different based on the custom profile of the target audience selected, as each target audience can respond differently to advertising. Behavioral economics marketing experts understand these differences, and account for such differences when preparing such templates. Such experts understand the mental "shortcuts" that consumers use when making decisions, how emotional impacts can drive someone toward or away from which would be considered a "rational" economic decision, and how consumers take into account behaviors or fellow consumers and social norms to guide them to what they believe is the "right" decision. Fig. 8 illustrates some example templates for a large postcard in the industry of wealth management for a college planning product, with a target audience of the "Balancing Act" profile prepared by experts in behavioral economic marketing. In step 130, the business can customize one or more editable areas of the template selected in step 125. As illustrated in Fig. 9, such customization can include, for example, inclusion of a subheadline, body copy, offer introduction, and the actual offer for a product, which can include a coupon, for example. When making such changes, the server 10 can provide the business with preferred colors and fonts as selected by the behavioral economics marketing experts.

Once the business has customized the selected template, then in step 135 the business can select whether tracking services are desired. Tracking services can help the business to learn more about the prospects (target audience) and benchmark the success of the advertising campaign. Such tracking serves can be provided via a web response page, telephone number, return post card, etc. For example, server 10 can create a Web response page that complements the advertisement and enables a business to learn more about the target audience without the target audience having to redeem a coupon or visit the business location. A web response page can help a business to determine who is responding to the advertising piece and facilitate a better two-way communication between the business and potential customers. By placing a web address (URL) or telephone number on the advertisements, or providing a return postcard, a business can capture potential customers specific interests in the business and the products offered by the business, as well as give the potential customers the opportunity to provide additional information about them. Such information could include, for example, plans to purchase in the future, birthdays, anniversaries, or other events, specific product interest, additional contact information, etc. This information can be stored in database 20 and utilized in the development and filling of categories/profiles of potential customers. Preferably, the information being requested has been specified by experts based on the product offered in the advertisements. Thus, the questionnaire presented on the web response page (or on a return postcard or being asked by a telephone operator) to a recipient of the advertisement will be tailored to include specific questions, based on recommendations from behavioral economics experts, for the business vertical, product, and geographic area/target audience to which original advertisement was sent.

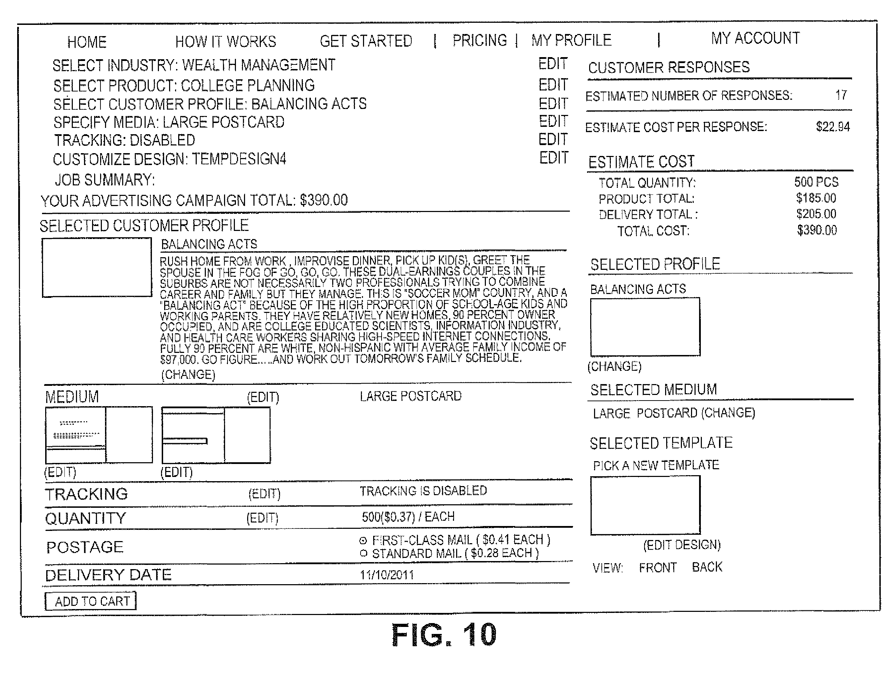

Preferably, in step 140, a summary page is provided by the server 10 to the business for review and approval of the final advertisement. Such summary page preferably includes the information about the industry, product, customer profile, media type, design customization, tracking services, etc. Fig. 10 illustrates an exemplary summary page, and includes the information above plus other information that may be applicable, e.g., postage costs, delivery date. Additionally, server 10 calculates the total cost for generation and delivery of the advertisements, as well as an expected response rate and the estimated cost per response of the advertising campaign. The business can then confirm the order, provide payment information, e.g., credit card, debit account, etc., and upon approval by the business, in step 145 the advertisements are created and distributed based on the media selected by the business. For example, for advertisements being sent by physical mail, the production system 15 can be used to print the mail pieces, place postage on the mail pieces and provide them to a carrier service for delivery to the intended recipients. Advertisements being sent by e-mail can be sent to the business customer computer system 40 by the server 10 via the network 30.

Thus, the present invention provides an efficient, economical way for a business of any size to generate targeted advertising that utilizes behavioral economics marketing experts to generate such advertising. Businesses no longer need to hire any marketing personnel or outside marketing firms to have access to experts in behavioral economics marketing, as the templates being provided to a business have already been prepared by such experts.

While preferred embodiments of the invention have been described and illustrated above, it should be understood that these are exemplary of the invention and are not to be considered as limiting. Additions, deletions, substitutions, and other modifications can be made without departing from the spirit or scope of the present invention. Accordingly, the invention is not to be considered as limited by the foregoing description but is only limited by the scope of the appended claims.

## Claims

1. A method for generating an advertisement comprising:
receiving, by a processing device (10), a business vertical for which the advertisement is being generated;
providing, by the processing device (10), at least one potential product associated with the business vertical;
receiving (110), by the processing device (10), a selected product from the at least one potential products associated with the business vertical that will be advertised by the advertisement;
receiving, by the processing device (10), a geographic area in which the advertisement is to occur;
providing, by the processing device (10), at least one category of people located within the geographic area, each of the at least one category of people including at least one common characteristic for people included in that respective category;
receiving (115), by the processing device (10), a selected target audience from the at least one category of people;
providing (125), by the processing device (10), at least one potential template, based on the selected product and selected target audience, for use for the advertisement; each of the at least one potential template being previously prepared and stored in a database (20) for retrieval by the processing device (10);
receiving, by the processing device (10), a selected template from the at least one potential template; and
creating (145), by the processing device (10), the advertisement using the selected product, selected target audience, and selected template.

2. The method of claim 1, further comprising:
providing (140), by the processing device (10), a summary page for review before creating the advertisement, the summary page including the business vertical, selected product, selected target audience and selected template.

3. The method of claim 1 or 2, wherein after the processing device (10) receives a selected template, the method further comprises:
receiving (130), by the processing device (10), at least one customization for the selected template.

4. The method of claim 1, 2 or 3, wherein the at least one common characteristic for people includes at least one of age, income level and existence of children.

5. The method of any preceding claim, wherein providing, by the processing device (10), at least one category of people located within the geographic area further comprises:
providing (115), by the processing device, at least one custom profile of people within each category, each of the at least one profile including additional information about people included in that respective at least one custom profile,
wherein the target audience is selected from the at least one custom profile of people within each category.

6. The method of any preceding claim, wherein the at least one potential template is prepared by a behavioral economics marketing expert.

7. The method of any preceding claim, further comprising:
receiving (135), by the processing device (10), a request for tracking services for the advertisement, the tracking services providing information about responses from the selected target audience to the advertisement.

8. A system for generating an advertisement comprising:
a processing device (10) coupled to a network (30); and
a database (20) coupled to the processing device,
wherein the processing device (10) is configured to receive (105) a business vertical for which the advertisement is being generated; provide (110) at least one potential product associated with the business vertical; receive (110) a selected product from the at least one potential products associated with the business vertical that will be advertised by the advertisement; receive a geographic area in which the advertisement is to occur; provide (115) at least one category of people located within the geographic area, each of the at least one category of people including at least one common characteristic for people included in that respective category; receive (115) a selected target audience from the at least one category of people; provide (125) at least one potential template, based on the selected product and selected target audience, for use for the advertisement; each of the at least one potential template being previously prepared and stored in the database (20) for retrieval by the processing device (10); receive a selected template from the at least one potential template; and create (145) the advertisement using the selected product, selected target audience, and selected template.

9. The system of claim 8, wherein the processing device (10) is further configured to provide (140) a summary page for review before creating the advertisement, the summary page including the business vertical, selected product, selected target audience and selected template.

10. The system of claim 8 or 9, wherein the processing device (10) is further configured to receive (130) at least one customization for the selected template,

11. The system of claim 8, 9 or 10, wherein the at least one common characteristic for people includes at least one of age, income level and existence of children.

12. The system of claim 8, 9, 10 or 11, wherein the processing device (10) is further configured to provide (115) at least one custom profile of people within each category, each of the at least one profile including additional information about people included in that respective at least one custom profile,
wherein the target audience is selected from the at least one custom profile of people within each category.

13. The system of any of claims 8 to 12, wherein the at least one potential template is prepared by a behavioral economics marketing expert.

14. The system of any of claims 8 to 13, wherein the processing device (10) is further configured to receive a request for tracking services for the advertisement, the tracking services providing information about responses from the selected target audience to the advertisement.
